# EUROPEAN PATENT SPECIFICATION

(11) **EP 2 163 403 B1**
(45) Date of publication and mention of the grant of the patent: **04.07.2012**
(21) Application number: 09170104.5
(22) Date of filing: 11.09.2009
(51) Int. Cl.: B60C 11/00, B60C 11/12

(54) **Pneumatic tire**
Luftreifen
Pneu

(30) Priority: 11.09.2008 US 96303 P
(43) Date of publication of application: 17.03.2010
(73) Proprietor: The Goodyear Tire & Rubber Company, Akron, OH 44316-0001 (US)
(72) Inventor: Cambron, Anne-France Gabrielle Jeanne-Marie, L-7562, Mersch (LU); Windeshausen, Michel Jean Yves, 6780, Messancy (BE); Dheur, Jean Luc, 6700, Arlon (BE); Nguyen, Gia Van, Thanh Pho Ho chi Minh (VN); Roesgen, Alain Emile Francois, L-9940, Asselborn (LU); Lacaze, Jean-Marc, 91177 Niederfeulen (LU); Roch, Peter Phelps, L-1933, Luxembourg (LU); Weimer, Andrew Frederick, Akron, OH 44333 (US); Thise, Ghislain Adolphe Leon, 6600, Bastogne (BE)
(74) Representative: Kutsch, Bernd

(56) References cited:
- EP-A2- 0 869 016
- EP-A2- 1 398 182
- EP-A2- 1 800 843
- EP-A2- 1 935 670

## Description

### Field of the Invention

The present invention is directed to a pneumatic tire. More particularly, the invention is directed to an evolving tread pattern and rubber composition that change as the tire wears in order to maintain performance.

### Background of the Invention

As a tire wears, the volume of the tread decreases due to frictional contact with the road surface. At the same time, the volume of the grooves decrease, as the non-skid decreases. Eventually, the tire will require replacement.

When the groove volume decreases, it reduces the tire's ability to channel water away from the tire footprint, reducing wet road tire performance. For some tread configurations, even if the tire tread has not worn down to the legal minimum non-skid depth, the tire's wet road performance may be severely limited.

As the tire wears, dry braking performance generally improves while wet braking performance may degrade.

It is thus desired to provide a tire having excellent handling and performance characteristics when new, and maintain an acceptable tire performance during its life.

EP-A- 1 800 843 describes a pneumatic tire in accordance with option (i) of the preamble of claim 1.

### Summary of the Invention

The invention relates to a tire according to claim 1.

Dependent claims refer to preferred embodiments of the invention.

Disclosed herein is a tire tread designed to have a variable tread pattern.

The tread pattern and rubber composition change with wear to achieve similar tread performance for the tire when both new and worn. The changing pattern and rubber composition optimize the worn tire performance in an attempt to maintain the tire's wet performance characteristics.

Preferably, the compound of the radially outer tread cap layer is just below the tread surface of the unworn tire and then progressively becomes visible (or part of the tread surface which is in contact with the road) with tire wear.

### Definitions

"Blade" means a protrusion in a tire curing mold that forms part of the tread design. The protrusion forms a corresponding depression in the finished tire tread.

"Groove" means an elongated void area in a tread that may extend circumferentially or laterally about the tread in a straight cured, or zigzag manner. Circumferentially and laterally extending grooves sometimes have common portions and may be sub classified as "wide" or "narrow." A "narrow groove" has a width greater than a sipe, but less than or equal to 4.0 mm such as from 1.5 to 3 mm and a "wide groove" has a width greater than 4.0 mm. The groove width is equal to tread surface area occupied by a groove or groove portion, divided by the length of such groove or groove portion; thus, the groove width is its average width over its length.

"Radial" and "radially" are used to mean directions radially toward or away from the axis of rotation of the tire.

"Rib" means a circumferentially extending strip of rubber of the tread which is defined by at least one circumferential groove and either a second circumferential groove or a lateral edge, wherein the strip is not divided by full depth grooves.

"Sipes" refer to very narrow width grooves molded into tread elements of a tire that subdivide the tread elements. Sipes have a width in the range of 0.3 mm to 1.0 mm. The width of a sipe is such that the sipe tends to dose completely in a tire footprint.

### Brief Description of the Drawings

The invention will be described by way of example and with reference to the accompanying drawings in which:
FIG. 1 is a perspective view of a first embodiment of a tire of the present invention;
FIG. 2 is a front view of the tire of FIG. 1;
FIG. 3 is a close up front view of the tire tread of FIG. 2; and
FIG. 4A and FIG. 4B are a partial cross-sectional views of a green tire tread section after extrusion (FIG. 4A) and a corresponding cured section of the tire tread (FIG. 4B);
FIGS. 5A-5C illustrate additional partial cross-sectional views of additional embodiments of a green tire tread section after extrusion;
FIG. 6 is a perspective view of a keyhole sipe blade;
FIG. 7 is a perspective view of a blade for forming a sunk groove;
FIGS. 8-11 illustrate a tire tread showing varying degrees of wear;
FIG. 12 illustrates the tire shown in Fig. 1 when the tire is worn such as at more than 70% worn for example; and
FIG. 13 illustrates a tire footprint of one embodiment with a worn tread, illustrating the water evacuation pathways.

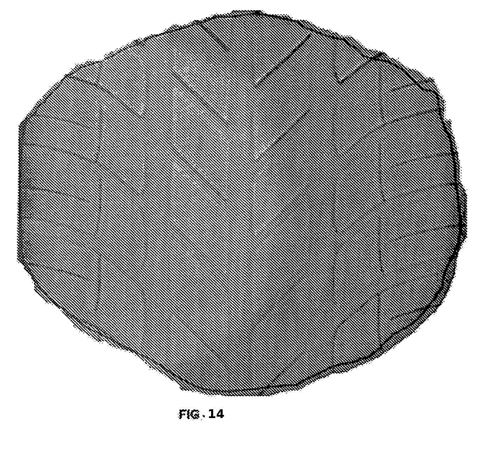

FIG. 14 illustrates a tire footprint of an other embodiment with an alternate worn tread design again illustrating the water evacuation pathways.

### Detailed Description of the Invention

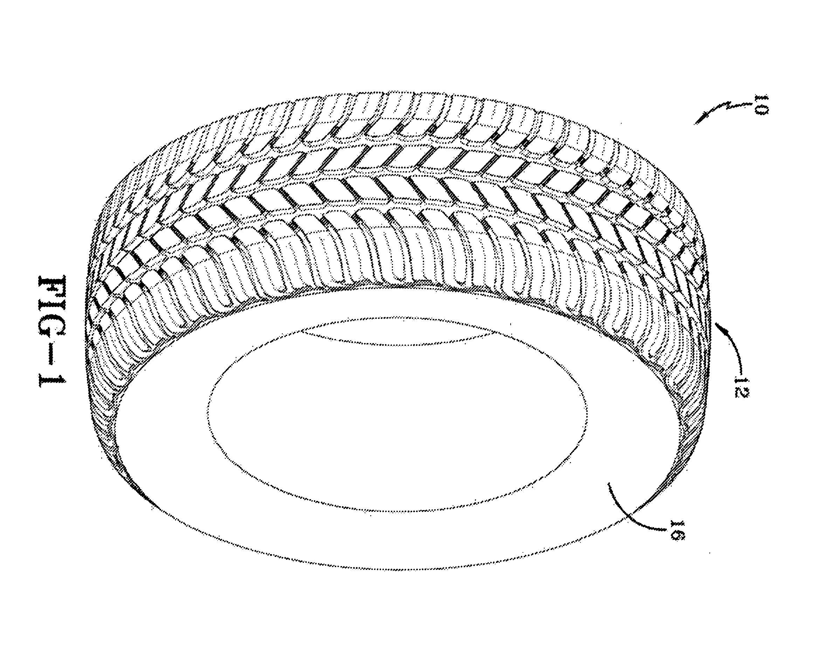

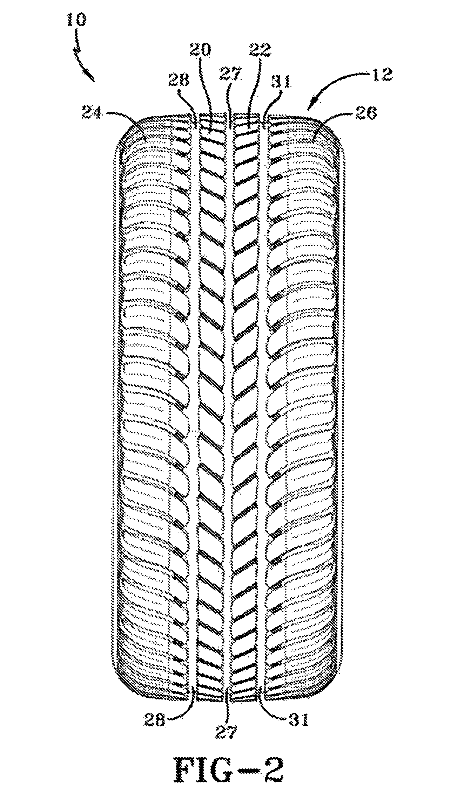

Figures 1-4 illustrate a first embodiment of a pneumatic tire, suitable for use as a passenger or truck tire, and particularly for use in wet conditions. The tire 10 has a tread 12 with a non-skid depth. The tread 12 is designed to evolve as the tire wears to reveal hidden or sunken grooves as well as a second tread rubber composition so that the wet skid performance and aquaplaning performance does not degrade to unacceptable levels.

The tire 10 comprises a carcass and two sidewalls 16 which extend radially downward from the tread 12. The tire carcass includes one or more radial plies (not shown) extending from and preferably wrapped about or otherwise secured to two annular beads (not shown). The tire may further optionally include an apex (not shown). The ply tumup in the bead area may be optionally reinforced with a chipper (not shown) wrapped about the bead ply. The tire 10 may further includes a liner as well as flippers and apexes (not shown) and other tire components known to those skilled in the art.

### TIRE TREAD DUAL COMPOUND

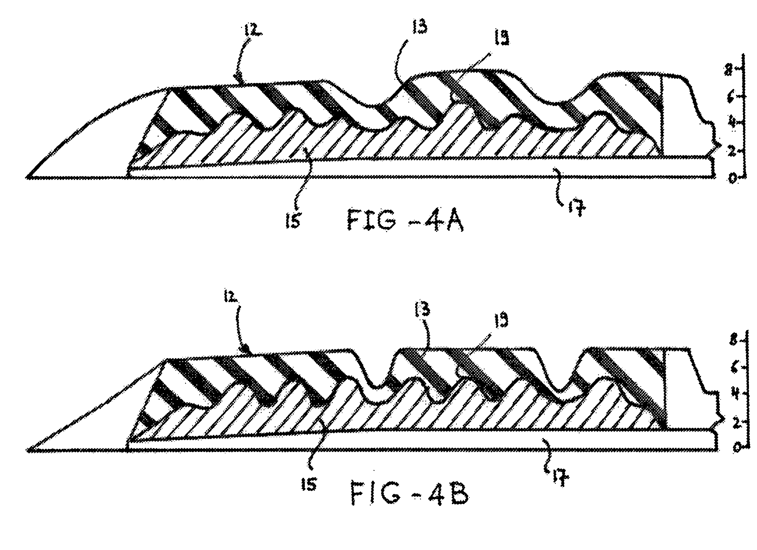

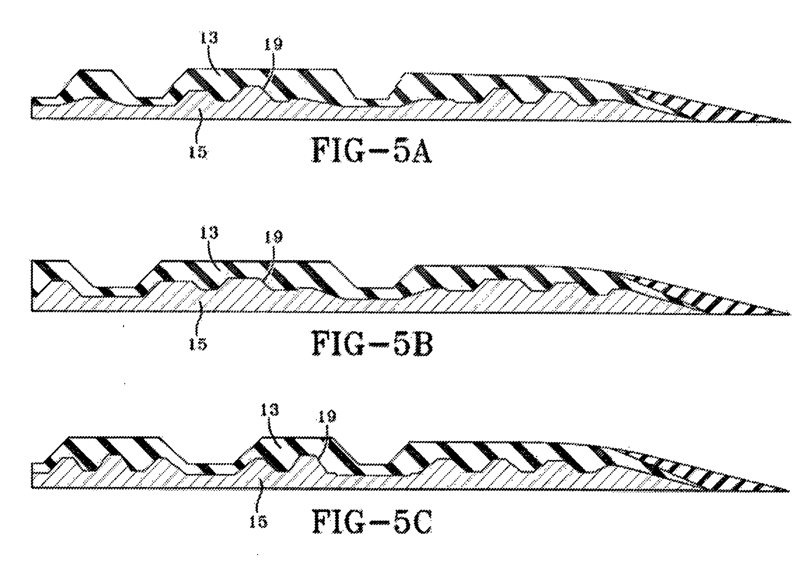

A cross-sectional view of the green tread layout is shown in Figure 4a and Figures 5a-5c. Figure 4b illustrates a cured tread. The tread 12 comprises a dual layered tread cap rubber layer comprising a combination of a radially outer tread cap layer 13 (or Cap 1) and a radially inner tread cap layer 15 (or Cap 2) together with an underlying tread base rubber layer 17 which underlies the tread cap layers 13, 15. As shown in the Figures 4a and 4b, the intersection 19 of the Cap 1 layer and the Cap 2 layer exhibits a wavy profile. In Fig. 4a, the separation 19 between the two tread cap layers 13,15 is designed to account for the rubber flow around the molding elements during curing. The separation line 19 may alternatively have sharp, saw tooth edges in the green tread depending on the manufacturing process. After curing, the intersection 19 between the inner tread cap layer 15 and the outer tread cap layer 13 (see Fig. 4b) provides a progressive exposure of the inner layer 15 as the outer layer 13 wears out it is preferred that there be at least one peak located in each tread block or rib in the uncured or cured tread. Preferably, there are two or more peaks in the uncured or cured tread. More preferably, there are at least three peaks in the uncured/cured tread between circumferential grooves. The wavy profile in the cured tread ensure that as the tread wears, the inner Cap 2 layer 15 is exposed gradually so that there is not a large step change in compound properties. Preferably, the Cap 2 layer 15 extends radically outwards of the tread circumferential groove bottoms, so that the Cap 2 layer extends into the tread block or rib. Preferably, the inner Cap 2 layer comes into contact with the surface of the road when the tire is used only when the tire is at least 20%, preferably at least 30%, worn with respect to its non-skid depth.

Alternatively, the Cap 1 and Cap 2 layer may be step shaped in the uncured or the cured tread, having a flat top.

The outer tread cap rubber layer 13 may be any desired tread compound, selected for example to promote low rolling resistance and good dry traction. The inner tread cap layer 15 comprises a rubber composition which promotes wet traction for the tread running surface as the outer tread cap layer wears away to expose the softer inner tread cap layer. In one aspect of the invention, the inner tread cap layer 15 may be softer and/or more silica rich that the outer tread cap layer 13. In one example for a summer tire, the tread caps may have the properties as described in the Table below. The tread caps may be co-extruded.

| | Tread cap 1 | Tread cap 2 | Difference in % |
|---|---|---|---|
| Mooney plasticity | 48 | 58 | 17 |
| RPAG' 1% | 3.6 | 5.8 | 37 |
| Cold rebound | 24 | 17 | -43 |

### TIRE TREAD RIB AND SIPE LAYOUT

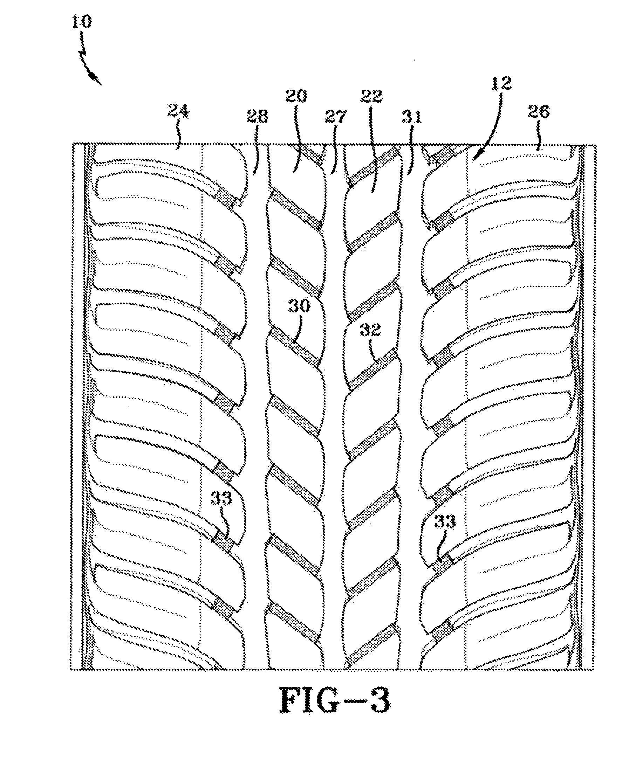

The tire tread 12 as shown in Figure 3, is symmetrical about a circumferential plane or longitudinal axis but the tire may also be assymetrical. The tire tread 12 has at least one circumferentially aligned row of ribs 20, preferably two circumferentially aligned rows of ribs 20 and 22. The ribs 20, 22 are preferably circumferentially continuous and positioned adjacent the longitudinal axis. The tread 12 further comprises two circumferentially aligned rows of shoulder blocks 24 and 26. The width of the shoulder blocks is preferably greater than the inner ribs 20, 22, and ranges from 1.5 to 3.5 times the inner rib width. The shoulder blocks are separated by lateral grooves.

Positioned between ribs 20, 22 is a central circumferential groove 27, preferably continuous. The circumferential groove 27 is wide and positioned on the centerplane of the tire. A second circumferential groove 28 is positioned between shoulder block 24 and rib 20. A third circumferential groove 31 is positioned between rib 22 and shoulder block 26. Thus in this particular embodiment, there are three circumferential grooves 27, 28, 31. The outermost grooves 28, 31 are preferably slightly wider than center groove 27. The two center ribs 20, 22 have sipes 30, 32 preferably angled with respect to the axial direction. The preferred angles range from 30 to 50 degrees as measured from the tire's axial direction. More preferably, the angle of the sipes varies from 40 to 50 degrees. Preferably, the sipes have a wavy shape.

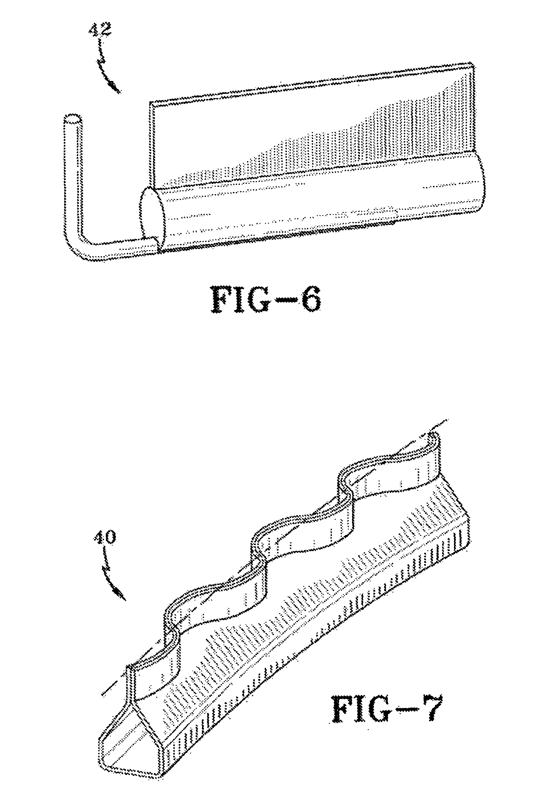

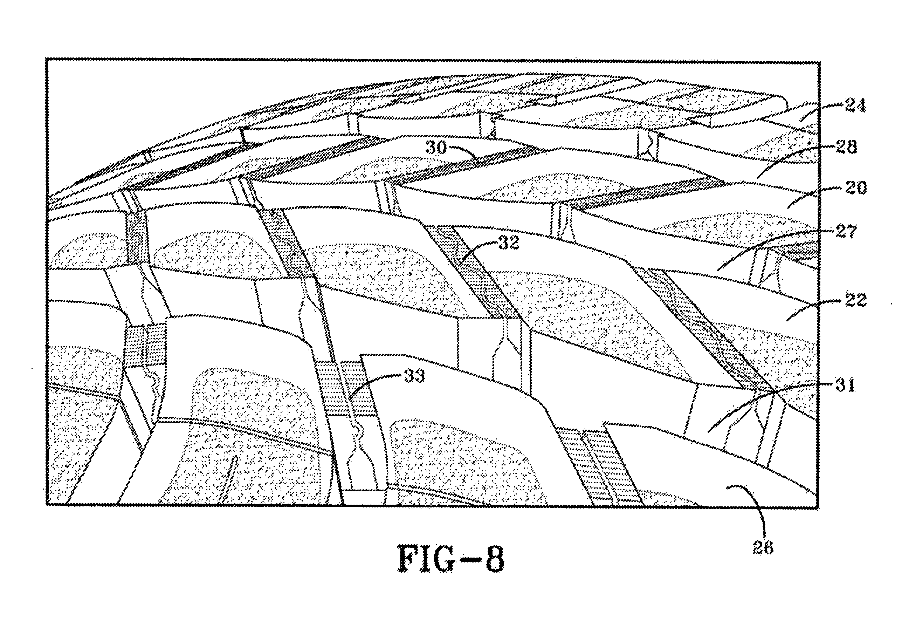

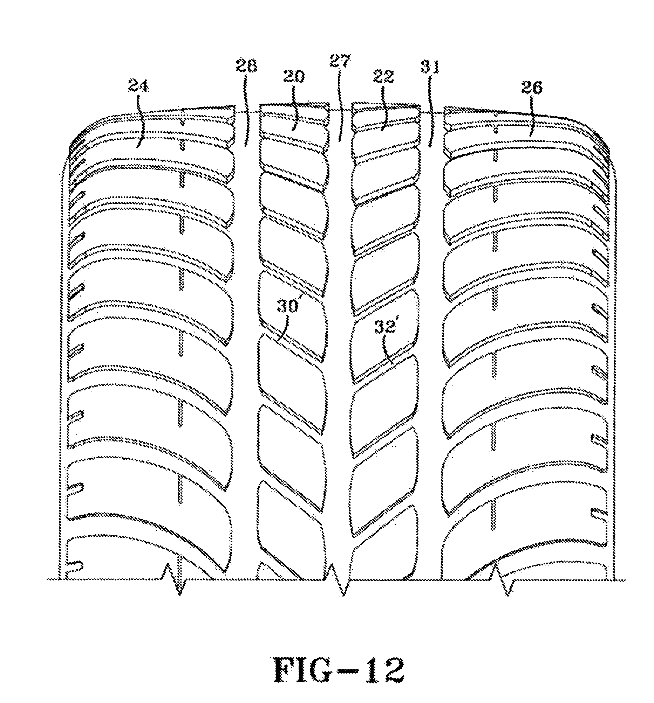

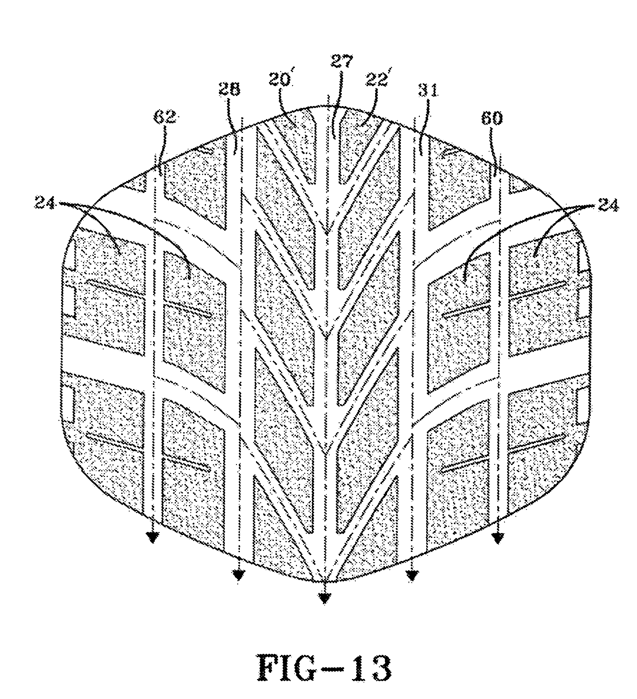

Preferably, sipes 30, 32 are formed by the blade 40 shown in Figure 7. The sipes 30, 32 have a sunken groove 30', 32' disposed beneath the sipe and which is exposed to the tire tread surface as the tire tread is worn away during use. The sunk groove 30', 32' may be straight while the upper portion of the blade that forms the sipe is straight or wavy. Alternatively, sipes 30, 32 may be replaced with a sunken groove. The sipes and/or sunk groove are positioned such as the tread wears, the sunk grooves 30', 32' are gradually exposed. Preferably, the sunk grooves 30', 32' are exposed when the tread 12 is at least 30% worn, preferably at least 40%, with respect to the non-skid depth at the tread. When exposed to the tread surface, the sunken grooves 30', 32' help channel water towards the circumferential grooves as shown in figure 13. The sipe/sunk groove combination may also be formed by a key-hole sipe blade 42 as shown in Fig. 6. When the sunk grooves are exposed to the tread surface, the ribs 20, 22 evolve into a circumferential row of tread blocks 20', 22'. Figures 8-11 illustrate the tread with different levels of wear. The Figures illustrate the sipe groove 30, 32 widening during wear, and eventually being replaced by a groove that connects the circumferential grooves 28, 27. Figure 12 illustrates the tire appearance when the tire is worn.

The sunk grooves 30', 32' may be at varying depths, and may extend at a greater depth than the grooves between the tread blocks or ribs. The grooves 30', 32' may be sunk below the tread surface at a depth in the range of 30-110% of the nonskid depth. Preferably the sunk grooves extend into the Cap 2 layer.

The tread shoulder blocks 24, 26 may additionally-comprise sunk grooves formed by the blade 40 or the sipe blade 42, or a sipe with a sunk groove beneath it for example. The sunk grooves when opened to the tread surface are positioned for communication with circumferential grooves 28, 31 to facilitate the channeling of water for hydroplaning resistance. The sipe/sunk groove combination may be formed by a key hole sipe blade 42 as shown in Figure 6.

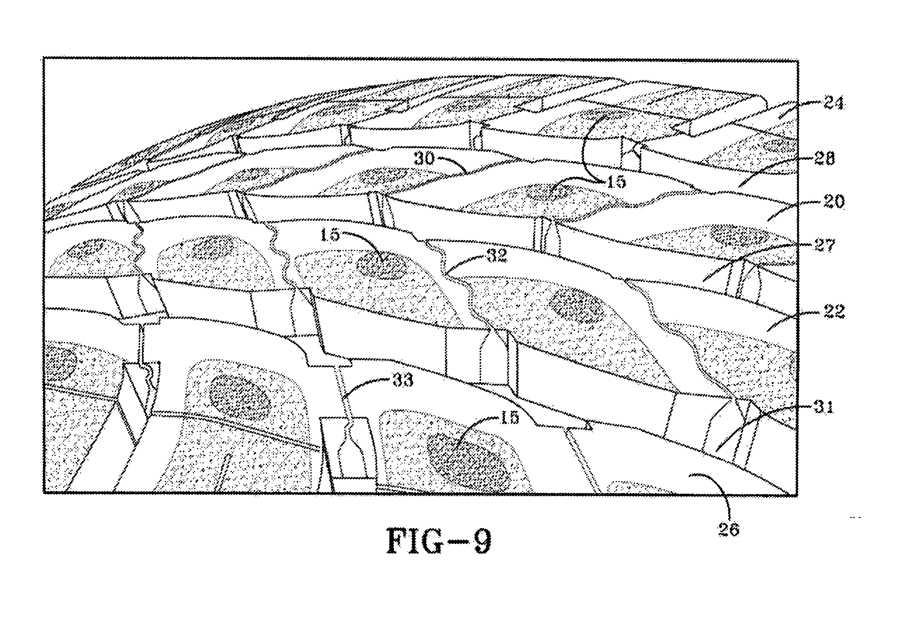

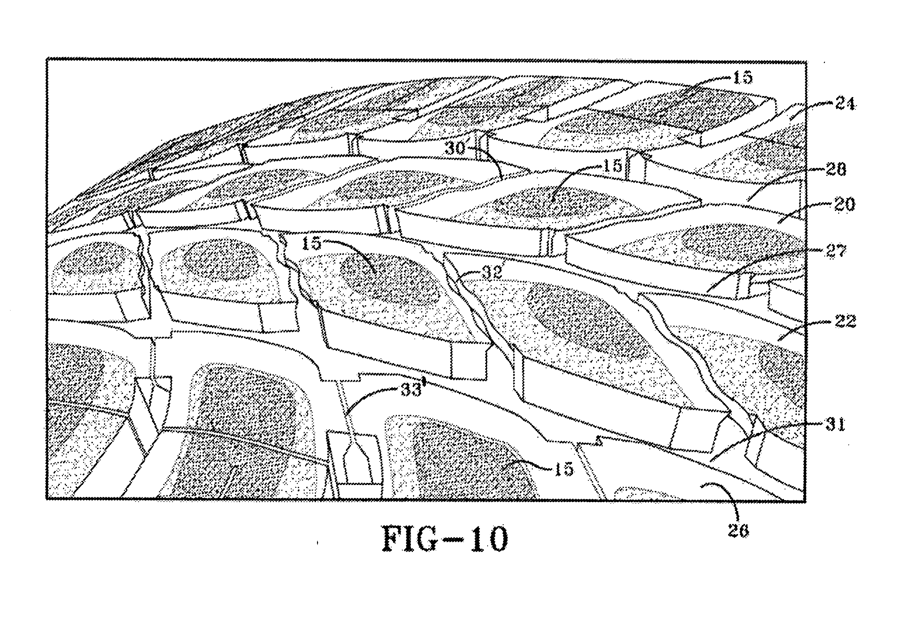

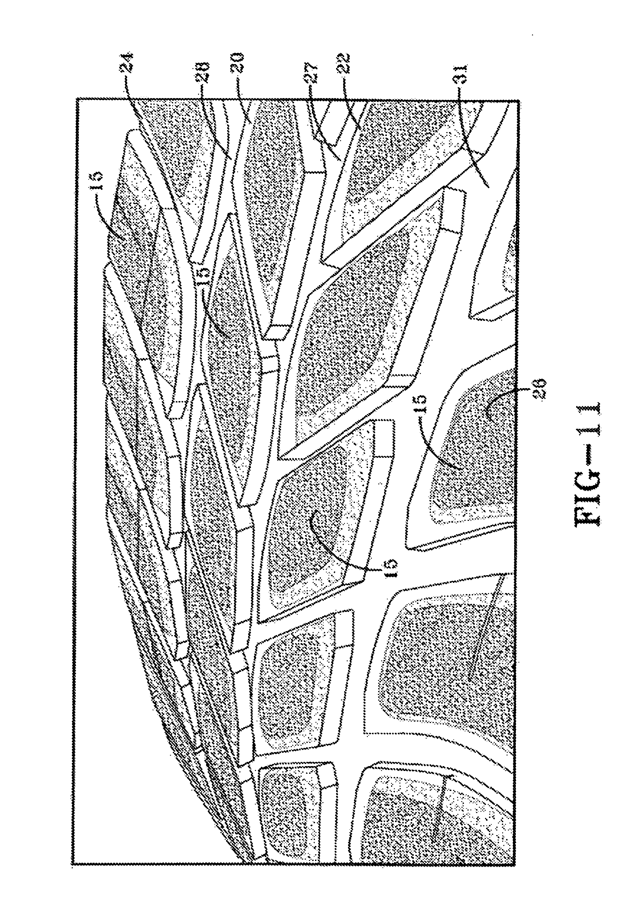

Figures 8-12 illustrate varying degrees of tread wear. Figure 8 shows the tread surface in a new or unworn condition. Figure 9 shows the tread surface in a slightly worn condition, i.e. 20% to 25% worn for instance, with sipes 30, 32, 33 still visible. A small portion of the cap 2 layer has been exposed. Figure 10 illustrates further wear, i.e. more than 50% worn for instance, of the tire tread. Sunken grooves 30', 32' have become exposed to the tread surface so that ribs 20, 22 have evolved into circumferentially aligned rows of blocks separated by grooves 30', 32'. The exposed sunken grooves 30', 32' cooperate with circumferentially aligned grooves 27, 28, 31 to channel the water for improved wet traction. Figure 10 also illustrates the increased exposed area of the Cap 2 layer having a tread compound selected for wet traction properties. Figures 11 and 12 illustrate even further tread wear wherein the lateral grooves in the shoulder are fully exposed and a higher amount of the inner tread cap layer 15 is exposed.

Figure 13 illustrates circumferential grooves 60, 62 in the shoulder blocks 24, 26 that are exposed upon wear.

The sunken grooves 30', 32', 33' may be sunk below the tread surface at a depth in the range of 30-110% of the nonskid depth.

## Claims

1. A pneumatic tire having a tire tread, the tread (12) comprising one or more circumferential grooves (27, 28, 31) and one or more ground engaging tread elements (20, 22);
the tread (12) having a radially outer surface and a non-skid tread depth as measured from the radially outer surface of the tread and a radially innermost surface of the grooves (27, 28, 31), and one or more grooves (30', 32') located radially inward and below the surface of the tread (12) when the tread (12) is unworn; wherein
(i) the one or more grooves (30', 32') are sunken grooves, or
(ii) the one or more grooves (30', 32') are grooves having a width larger than the width of a sipe (30, 32), wherein a sipe (30, 32) is positioned on the surface of the tread (12) when the tread (12) is unworn and said groove is located radially inward of said sipe (30, 32), said sipe (30, 32) fading into said groove with wear of the tread (12);
the tread (12) comprising a tread base layer (17) comprising a tread base compound, a radially outer tread cap layer (13) comprising a first tread cap compound, and a radially inner tread cap layer (15) comprising a second tread cap compound, **characterized in that**
the radially inner tread cap compound is below the surface of the tread (12) when the tread is unworn, and wherein the intersection of the radially outer tread cap layer (13) and the radially inner tread cap layer (15) is wavy.

2. The tire of claim 1 wherein the one or more grooves (30', 32") are in fluid communication with the one or more circumferential grooves (27, 28, 31) when the tread is in a worn condition.

3. The tire of claim 1 or 2 wherein the second tread cap compound extends radially upwards into the tread elements (20, 22).

4. The tire of at least one of the previous claims wherein the second tread cap compound has a Mooney plasticity of in a range of from 55 to 61, alternatively 56 to 60, such as 58.

5. The tire of claim 1 or 4 wherein the second tread cap compound has a cold rebound in a range of from 15 to 19, alternatively 16 to 18, such as 17.

6. The tire of at least one of the previous claims wherein the first tread cap compound is selected for tread wear, and the second tread cap compound is selected for wet traction.

7. The tire of at least one of the previous claims wherein the interface between the first and second tread cap compound forms at least one peak located in a tread element.

8. The tire of at least one of the previous claims wherein the tread element is a rib.

9. The tire of at least one of the previous claims wherein the tread element is a tread block.

10. The tire of at least one of the previous claims wherein the surface of the tread (12) comprises three circumferentially continuous grooves (27, 28, 31), wherein one of the grooves (27) is located in the center plane of the tire.

11. The tire of at least one of the previous claims wherein the surface of the tread (12) comprises at least two circumferentially continuous ribs (20, 22), wherein the ribs (20, 22) are located adjacent a circumferentially continuous groove (27).

12. The tire of at least one of the previous claims wherein the first tread cap compound has a Mooney plasticity of in a range of from 45 to 51, alternatively 46 to 50, such as 48.

13. The tire of claim 1 or 12 wherein the first tread cap compound has a cold rebound in a range of from 22 to 26, alternatively 23 to 25, such as 24.

14. The tire of at least one or the previous claims wherein the difference in the Mooney plasticity from the first tread compound to the second tread compound is at least +7, preferably at least +9.

15. The tire of claim 1 or 14 wherein the difference in the cold rebound from the first tread compound to the second tread compound is at least -4, preferably at least -6.

## Patentansprüche

1. Luftreifen mit einer Reifenlauffläche, wobei die Lauffläche (12) eine oder mehrere umfangsgerichtete Rillen (27, 28, 31) und ein oder mehrere am Boden angreifende Profilelemente (20, 22) umfasst;
wobei die Lauffläche (12) eine radial äußere Fläche und eine Laufflächenprofiltiefe, gemessen ab der radial äußeren Fläche der Lauffläche und einer radial innersten Fläche der Rillen (27, 28, 31), und ein oder mehrere Rillen (30', 32'), die sich radial einwärts und unter der Oberfläche der Lauffläche (12) befinden, wenn die Lauffläche (12) unabgenutzt ist, aufweist; wobei
(i) die eine oder mehreren Rillen (30', 32') versenkte Rillen sind, oder
(ii) die eine oder mehreren Rillen (30', 32') Rillen sind mit einer Breite, die größer als die Breite eines Feineinschnitts (30, 32) ist, wobei ein Feineinschnitt (30, 32) an der Oberfläche der Lauffläche (12) positioniert ist, wenn die Lauffläche (12) unabgenutzt ist, und die Rille sich radial einwärts von dem Feineinschnitt (30, 32) befindet, wobei der Feineinschnitt (30, 32) bei Abnutzung der Lauffläche (12) in die Rille übergeht;
wobei die Lauffläche (12) eine Laufstreifenunterteilschicht (17) umfasst, die eine Laufstreifenunterteilmischung umfasst, eine radial äußere Laufstreifenoberteilschicht (13), die eine erste Laufstreifenoberteilmischung umfasst, und eine radial innere Laufstreifenoberteilschicht (15), die eine zweite Laufstreifenoberteilmischung umfasst, **dadurch gekennzeichnet, dass**
die radial innere Laufstreifenoberteilmischung sich unter der Oberfläche der Lauffläche (12) befindet, wenn die Lauffläche unabgenutzt ist, und wobei die Schnittfläche der radial äußeren Laufstreifenoberteilschicht (13) und der radial inneren Laufstreifenoberteilschicht (15) wellenförmig ist.

2. Reifen nach Anspruch 1, wobei die eine oder mehreren Rillen (30', 32') in Fluidverbindung mit der einen oder mehreren umfangsgerichtete Rillen (27, 28, 31) stehen, wenn die Lauffläche sich in einem abgenutzten Zustand befindet.

3. Reifen nach Anspruch 1 oder 2, wobei die zweite Laufstreifenoberteilmischung sich radial aufwärts in die Profilelemente (20, 22) erstreckt.

4. Reifen nach mindestens einem der vorgenannten Ansprüche, wobei die zweite Laufstreifenoberteilmischung eine Mooney-Plastizität in einem Bereich von 55 bis 61, alternativ von 56 bis 60, wie etwa 58, aufweist.

5. Reifen nach Anspruch 1 oder 4, wobei die zweite Laufstreifenoberteilmischung einen Kaltrückprall in einem Bereich von 15 bis 19, alternativ 16 bis 18, wie etwa 17, aufweist.

6. Reifen nach mindestens einem der vorgenannten Ansprüche, wobei die erste Laufstreifenoberteilmischung in Hinblick auf Laufflächenabnutzung ausgewählt ist und die zweite Laufstreifenoberteilmischung in Hinblick auf Nasshaftung ausgewählt ist.

7. Reifen nach mindestens einem der vorgenannten Ansprüche, wobei die Grenzfläche zwischen der ersten und der zweiten Laufstreifenoberteilmischung mindestens einen in einem Profilelement befindlichen Höchstpunkt bildet.

8. Reifen nach mindestens einem der vorgenannten Ansprüche, wobei das Profilelement eine Rippe ist.

9. Reifen nach mindestens einem der vorgenannten Ansprüche, wobei das Profilelement ein Profilblock ist.

10. Reifen nach mindestens einem der vorgenannten Ansprüche, wobei die Oberfläche der Lauffläche (12) drei in Umfangsrichtung kontinuierliche Rillen (27, 28, 31) umfasst, wobei eine der Rillen (27) sich in der Mittelebene des Reifens befindet.

11. Reifen nach mindestens einem der vorgenannten Ansprüche, wobei die Oberfläche der Lauffläche (12) mindestens zwei in Umfangsrichtung kontinuierliche Rippen (20, 22) umfasst, wobei die Rippen (20, 22) sich benachbart zu einer in Umfangsrichtung kontinuierlichen Rille (27) befinden.

12. Reifen nach mindestens einem der vorgenannten Ansprüche, wobei die erste Laufstreifenoberteilmischung eine Mooney-Plastizität in einem Bereich von 45 bis 51, alternativ 46 bis 50, wie etwa 48, aufweist.

13. Reifen nach Anspruch 1 oder 12, wobei die erste Laufstreifenoberteilmischung einen Kaltrückprall in einem Bereich von 22 bis 26, alternativ 23 bis 25, wie etwa 24, aufweist.

14. Reifen nach mindestens einem der vorgenannten Ansprüche, wobei der Unterschied in der Mooney-Plastizität von der ersten Laufflächenmischung zu der zweiten Laufflächenmischung mindestens +7, bevorzugt mindestens +9, beträgt.

15. Reifen nach Anspruch 1 oder 14, wobei der Unterschied im Kaltrückprall von der ersten Laufflächenmischung zu der zweiten Laufflächenmischung mindestens -4, bevorzugt mindestens -6, beträgt.

## Revendications

1. Bandage pneumatique possédant une bande de roulement de bandage pneumatique, la bande de roulement (12) comprenant une ou plusieurs rainures circonférentielles (27, 28, 31) et un ou plusieurs éléments de bande de roulement (20, 22) entrant en contact avec le sol ;
la bande de roulement (12) possédant une surface externe en direction radiale et une profondeur de sculpture de bande de roulement, telle qu'on la mesure entre la surface externe de la bande de roulement en direction radiale et la surface la plus interne des rainures (27, 28, 31), en direction radiale, et une ou plusieurs rainures (30, 32) qui sont disposées en direction radiale à l'intérieur et en dessous de la surface de la bande de roulement (12) lorsque la bande de roulement (12) n'est pas usée ; dans laquelle
(i) lesdites une ou plusieurs rainures (30', 32') sont des rainures noyées ; ou
(ii) lesdites une ou plusieurs rainures (30', 32') sont des rainures dont la largeur est supérieure à la largeur d'une lamelle (30, 32), la lamelle (30, 32) étant disposée sur la surface de la bande de roulement (12) lorsque la bande de roulement (12) n'est pas usée, et ladite rainure est disposée en direction radiale à l'intérieur de ladite lamelle (30, 32), ladite lamelle (30, 32) disparaissant dans ladite rainure au fur et à mesure de l'usure de la bande de roulement (12) ;
la bande de roulement (12) comprenant une couche de base de bande de roulement (17) comprenant un composé de base de bande de roulement, une couche de sommet de bande de roulement externe en direction radiale (13) comprenant un premier composé de sommet de bande de roulement, et une couche de sommet de bande de roulement interne en direction radiale (15) comprenant un deuxième composé de sommet de bande de roulement, **caractérisé en ce que**
le composé de sommet de bande de roulement interne en direction radiale est situé en dessous de la surface de la bande de roulement (12) lorsque la bande de roulement n'est pas usée, et dans lequel l'intersection de la couche de sommet de bande de roulement externe en direction radiale (13) et la couche de sommet de bande de roulement interne en direction radiale (15) est ondulée.

2. Bandage pneumatique selon la revendication 1, dans lequel lesdites une ou plusieurs rainures (30', 32') sont mis en communication par fluide avec lesdites une ou plusieurs rainures circonférentielles (27, 28, 31) lorsque la bande de roulement se trouve à l'état usé.

3. Bandage pneumatique selon la revendication 1 ou 2, dans lequel le deuxième composé de sommet de bande de roulement s'étend en direction radiale vers le haut jusque dans les éléments de bande de roulement (20, 22).

4. Bandage pneumatique selon au moins une des revendications précédentes, dans lequel le deuxième composé de sommet de bande de roulement possède une plasticité de Mooney dans la plage de 55 à 61, en variante de 56 à 60, par exemple de 58.

5. Bandage pneumatique selon la revendication 1 ou 4, dans lequel le deuxième composé de sommet de bande de roulement possède un rebond à froid dans la plage de 15 19, en variante de 16 à 18, par exemple de 17.

6. Bandage pneumatique selon au moins une des revendications précédentes, dans lequel le premier composé de sommet de bande de roulement est choisi pour l'usure de la bande de roulement et le deuxième composé de sommet de bande de roulement est choisi pour la traction dans des conditions humides.

7. Bandage pneumatique selon au moins une des revendications précédentes, dans lequel l'interface entre le premier et le deuxième composé de sommet de bande de roulement forme au moins un pic situé dans un élément de bande de roulement.

8. Bandage pneumatique selon au moins une des revendications précédentes, dans lequel l'élément de bande de roulement est une nervure.

9. Bandage pneumatique selon au moins une des revendications précédentes, dans lequel l'élément de bande de roulement est un pavé de bande de roulement.

10. Bandage pneumatique selon au moins une des revendications précédentes, dans lequel la surface de la bande de roulement (12) comprend trois rainures continues en direction circonférentielle (27, 28, 31), une des rainures (27) étant disposée dans le plan central du bandage pneumatique.

11. Bandage pneumatique selon au moins une des revendications précédentes, dans lequel la surface de bande de roulement (12) comprend au moins deux nervures continues en direction circonférentielle (20, 22), les nervures (20, 22) étant disposées en position adjacente à une rainure continue en direction circonférentielle (27).

12. Bandage pneumatique selon au moins une des revendications précédentes, dans lequel le premier composé de sommet de bande de roulement possède une plasticité de Mooney dans la plage de 45 à 51, en variante de 46 à 50, par exemple de 48.

13. Bandage pneumatique selon la revendication 1 ou 12, dans lequel le premier composé de sommet de bande de roulement possède un rebond à froid dans la plage de 22 26, en variante de 23 à 25, par exemple de 24.

14. Bandage pneumatique selon au moins une des revendications précédentes, dans lequel la différence concernant la plasticité de Mooney entre le premier composé de bande de roulement et le deuxième composé de bande de roulement s'élève à au moins +7, de préférence à au moins +9.

15. Bandage pneumatique selon la revendication 1 ou 14, dans lequel la différence concernant le rebond à froid entre le premier composé de bande de roulement et le deuxième composé de bande de roulement s'élève à au moins -4, de préférence à au moins -6.
